# EUROPEAN PATENT SPECIFICATION

(11) **EP 1 718 397 B1**
(45) Date of publication and mention of the grant of the patent: **24.11.2010**
(21) Application number: 05710880.5
(22) Date of filing: 10.02.2005
(51) Int. Cl.: B01D 65/02, B01D 65/08, B01D 61/14, B01D 63/02

(54) **APPARATUS AND METHOD FOR MICRO OR ULTRAFILTRATION**
VERFAHREN UND VORRICHTUNG ZUR MIKRO- ODER ULTRAFILTRATION
APPAREIL ET PROCEDE DE MICRO OU ULTRAFILTRATION

(30) Priority: 11.02.2004 NL 1025459
(43) Date of publication of application: 08.11.2006
(73) Proprietor: Friesland Brands B.V., 7943 PE Meppel (NL)
(72) Inventor: KROMPKAMP, Jantje, NL-6711 BE Ede (NL); VAN DER PADT, Albert, NL-7321 EA Apeldoorn (NL); VAN DER VORST, Cornelis, Petrus, Jacobus, Maria, NL-6824 JL Arnhem (NL)
(74) Representative: van Loon, C.J.J.
(86) International application number: PCT/NL2005/000098
(87) International publication number: WO 2005/082499

(56) References cited:
- EP-A- 0 588 348
- EP-A- 0 595 689
- EP-A- 1 043 053
- WO-A-01/10540
- DE-A- 10 224 513
- FR-A- 2 586 202
- NL-C- 1 020 180
- US-A1- 2003 132 175

## Description

The invention relates to an apparatus provided with a micro or ultrafiltration filter, wherein the filter is provided with a filter housing having a retentate side and a permeate side, where the retentate side and the permeate side are separated from each other by filter material, wherein a fluid supply pipe is connected to the retentate side and a permeate discharge pipe to the permeate side, wherein, in the permeate discharge pipe, a shut-off valve operable at a high frequency is provided and wherein means are connected to the permeate side for increasing the pressure in the permeate side when the said shut-off valve is closed to a value which is higher than the pressure on the retentate side.

Such an apparatus is known from DE-A1-10 224 513, which, more in particular, discloses an apparatus comprising a thin membrane filter that is periodically cleaned by a back-pulse of fluid generated by a valve located at the permeate side of the membrane filter. The valve disclosed in said publication includes a plug that is oscillated by a drive unit, whereby the plug not only closes the permeate discharge pipe, but also reverses the direction of the fluid stream in the valve and in a part of the discharge pipe.

Micro or ultrafiltration are filtration processes used to separate fluids on the basis of a difference in particle or molecule dimensions. For this purpose, filter material is used with a pore diameter of the order of magnitude of 0.1-10 micrometer (microfiltration) or with a MWCO (molecular weight cut off) of 1 kDa to about 200 kDa (ultrafiltration). In practice, such filter material is also referred to by the term filter membrane. Examples of applications are concentrating proteins in milk, removing microorganisms and clearing fruit juices and wine. Important process parameters for micro and ultrafiltration are the flux and the selectivity. The flux relates to the amount of fluid that permeates per time unit and per unit of filter material surface and is an indicator of the capacity of the process. The selectivity indicates the ratio of the concentration of two components to be separated in the permeate in relation to the starting fluid and is a measure of the efficiency of the separation step.

A problem of micro and ultrafiltration is that the filter material pollutes very rapidly; blocked components accumulate against and in the filter material and this adversely affects the flux and the selectivity of the process. It has already been proposed to clean the filter material by reversing the fluid flow in the filter material. In the literature, such an action is referred to by the term back pulsing. A description thereof is given in European patent application EP-A-0 588 348. The solution described in that publication is not suitable for high-frequency back pulsing. A high frequency is desired to keep the filter material as clean as possible. In addition, the back pulse needs to take as short a time as possible to adversely affect the capacity of the filtration process as little as possible. These objects are insufficiently achieved with the apparatuses described in the aforementioned European and the German applications. The invention contemplates an apparatus in which these objects are achieved.

For this purpose, according to the invention, the apparatus of the type described in the introduction is **characterized in that** the means for increasing the pressure comprise at least one permeate circulation circuit which is, on the one side, connected, by an inlet, to the permeate discharge pipe at a point downstream of the shut-off valve and, on the other side, by an outlet, to the permeate side of the filter housing, wherein a permeate circulation pump is provided in the permeate circulation circuit..

In a thus designed apparatus, in an opened condition of the shut-off valve, permeate is pumped around through the permeate circulation circuit. As soon as the shut-off valve is in a closed position, the pressure will increase downstream of the permeate circulation pump, resulting in the pressure in the permeate side of the filter housing increasing. When the shut-off valve remains closed long enough, the pressure on the permeate side will become higher than on the retentate side and back pulsing will occur. The above means for increasing the pressure are designed such that the pressure on the permeate side increases very fast to above the pressure prevailing in the retentate side. This is because then, in a minimal period of time, the back pulse can be effected, after which the shut-off valve can be opened again and the normal filtration process can take place again. Thus, the capacity of the filtration process is hardly adversely affected. A very rapid pressure build-up can be obtained with an apparatus in which the shut-off valve is designed to be opened and closed periodically, with the shut-off valve being kept in a closed position so long that a higher pressure is built up on the permeate side than on the retentate side, such that a reversal of the fluid flow in the filter material occurs, while the means for increasing the pressure in the permeate side are designed such that, for the rest, a reversal of flow direction of fluid in pipes of the apparatus is prevented. Because no reversal of the flow direction of fluid volumes occurs in any of the pipes, the inertia in the system during the building up of the hydrostatic pressure on the permeate side will be minimal.

By suddenly closing the shut-off valve, pressure instability in the pipe system can occur, which could result in, for instance, water shock. In order to prevent this phenomenon, according to a further elaboration, it is particularly favorable if, upstream of the outlet of the permeate circulation circuit and downstream of the permeate circulation pump, a restriction is included in order to prevent a jerky pressure build-up.

In addition, in the permeate circulation circuit, a permeate buffer tank may be included for feeding the pump during the closed condition of the shut-off valve.

According to a further elaboration of the invention, it is particularly favorable if the fluid supply pipe is connected to a first end of the rotontate side of the filter housing, while a retentate circulation circuit is provided, while an inlet of the retentate circulation circuit is connected to a second end of the retentate side of the filter housing, while an outlet of the retentate circulation circuit is connected to the fluid supply pipe, while a retentate circulation pump is provided in the retentate circulation circuit, while the first end is opposite the second end, such that, with a switched-on retentate circulation pump, a cross-flow along the filter material occurs. Such a cross-flow results in a cleaning action of the filter material which, in combination with the above-described back pulsing, results in an improved selectivity and flux of the filter material.

According to a further elaboration of the invention, it is favorable if the outlet of the permeate circulation circuit is connected to a first end of the permeate side of the filter housing, while the permeate discharge pipe is connected to a second end of the permeate side of the filter housing, while the first end is opposite the second end, such that, on the permeate side of the filter housing, a cross-flow along the filter material occurs, while the cross-flow on the retentate side has the same flow direction as the cross-flow on the permeate side.

It has been found that, on the retentate side, under the influence of the cross-flow prevailing there, a pressure drop prevails in the filter housing viewed in the cross-flow direction. This therefore results in the pressure on the retentate side of the filter material not being equal over the whole surface of the filter material. If there is an equal pressure everywhere on the permeate side of the filter material, the result will be that the pressure drop over the filter material viewed over the surface of the filter material varies. This in turn results in the flow rate through the filter material viewed over the surface of the filter material not being equal everywhere. By now ensuring that the cross-flow on the retentate side has the same flow direction as the cross-flow on the permeate side, a substantially equal pressure drop can be effected over the whole surface of the filter material.

According to a further elaboration of the invention, in opened condition of the shut-off valve, the circulation in both circulation circuits mentioned is such that the pressure drop is substantially equal over the whole surface of the filter material.

According to a further elaboration of the invention, more than one permeate circulation circuit can be provided for forming a corresponding number of back pulse pressure areas on the permeate side of the filter housing. This has the advantage that, in the part in the filter where more pollution occurs, back pulsing can, for instance, take place more often and/or using more volume and/or counterpressure. This has the advantage that, with severely polluting areas, the cleaning can be carried out more thoroughly and/or more regularly than in areas where the pollution is only limited.

It will be clear that the retentate circulation circuit is also connected to a retentate discharge pipe.

According to a further elaboration of the invention, it is particularly favorable when the frequency at which the shut-off valve is operable is in the range of 1-1000 Hertz. At such a frequency, an excellent selectivity can be preserved as well as an improvement of the capacity of the apparatus. Viewed in time, the shut-off valve may, for instance, be closed 2-50% and opened 50-98%.

According to a further elaboration of the invention, the shut-off valve may comprise a valve housing in which a rotating camshaft is arranged, while the cam of the camshaft forms a closure in a certain range of rotational positions and allows a free passage of permeate in other positions, the camshaft being continuously drivable. Such as shut-off valve has a simple construction. Preferably, the rotational speed of the camshaft is controllable for controlling the back-pulse frequency.

The invention further relates to a method comprising the steps of providing and operating an apparatus according to the invention, wherein for operating said apparatus, in the filter housing, periodically at a high frequency, a higher pressure is built up on the permeate side than on the retentate side, such that a reversal of the fluid flow in the filter material occurs and a reversal of flow direction of fluid volumes in pipes of the apparatus is prevented.

According to a further elaboration of the method according to the invention, in both the retentate and the permeate side of the filter housing, a cross-flow can be maintained for a further improvement of the flux and the selectivity of the filter material and for maintaining a substantially equal pressure drop over the whole surface of the filter material.

The invention will now be explained on the basis of two exemplary embodiments with reference to the drawing, in which:
Fig. 1 shows a first exemplary embodiment of the apparatus according to the invention;
Fig. 2 shows a second exemplary embodiment; and
Fig. 3 shows a third exemplary embodiment.

The Figures all shows an exemplary embodiment of the apparatus where the filter housing is designated by 1. In the filter housing, filter material 2 is included which is usually designed as a filter membrane in practice. The filter membrane 2 divides the filter housing into a retentate side 3 and a permeate side 4. To the retentate side 3, a fluid supply pipe 5 is connected. To the permeate side 4, a fluid discharge pipe 6 is connected. In the permeate discharge pipe 6, near the filter housing 1, a shut-off valve 7 operable at a high frequency is included. Further, a permeate circulation circuit is provided which comprises a circulation pipe 8. The permeate circulation pipe 8 is connected, by an inlet, to the permeate discharge pipe 6 at a point downstream of the shut-off valve 7. An outlet of the permeate circulation pipe 8 is connected to the permeate side of the filter housing 1. In the permeate circulation pipe 8, a permeate circulation pump 9 is provided. Downstream of the pump 9 and upstream of the outlet 10, a restriction 11 is included in order to prevent jerky pressure build-up. Further, in the permeate circulation pipe 8, a permeate buffer tank 12 is included for feeding the permeate circulation pump 9 during the closed position of the shut-off valve 7. The fluid supply pipe 5 is connected to a first end 15 of the retentate side 3 of the filter housing 1. Further, a retentate circulation circuit is provided of which the inlet 12 is connected to a second end 16 of the retentate side 3 of the filter housing 1. An outlet 13 of the retentate circulation circuit is connected to the fluid supply pipe 5. In the retentate circulation circuit, which comprises a retentate circulation pipe 14, a retentate circulation pump 17 is provided. The first end 15 is opposite the second end 16, such that, with a switched-on retentate circulation pump 17, a cross-flow along the filter membrane 2 occurs. The outlet 10 of the permeate circulation circuit 8 is connected to a first end 18 of the permeate side of the filter housing 1. The permeate discharge pipe 6 is connected to a second end 19 of the permeate side 4 of the filter housing 1. The first end 18 is opposite the second end 19, such that, on the permeate side of the filter housing 1, a cross-flow along the filter material 2 occurs. The cross-flow on the retentate side 3 has the same flow direction as the cross-flow on the permeate side 4. Here, the permeate circulation pump 9 and the retentate circulation pump 17 are preferably controlled such that, in opened condition of the shut-off valve 7, the circulation in both circulation circuits is such that the pressure drop is substantially equal over the whole surface of the filter material 2. To the retentate circulation circuit 14, further, a retentate discharge pipe 20 is connected for discharging the retentate not recirculated via the recirculation pipe 14.

The shut-off valve 7 is provided with a valve housing in which a rotating camshaft 21 is arranged. A cam 22 on the camshaft 21 forms a closure in a certain range of rotational positions and allows a free passage of permeate in the other positions. Preferably, the camshaft 21 is continuously drivable and the rotational speed of the camshaft 21 is controllable for controlling the back-pulse frequency.

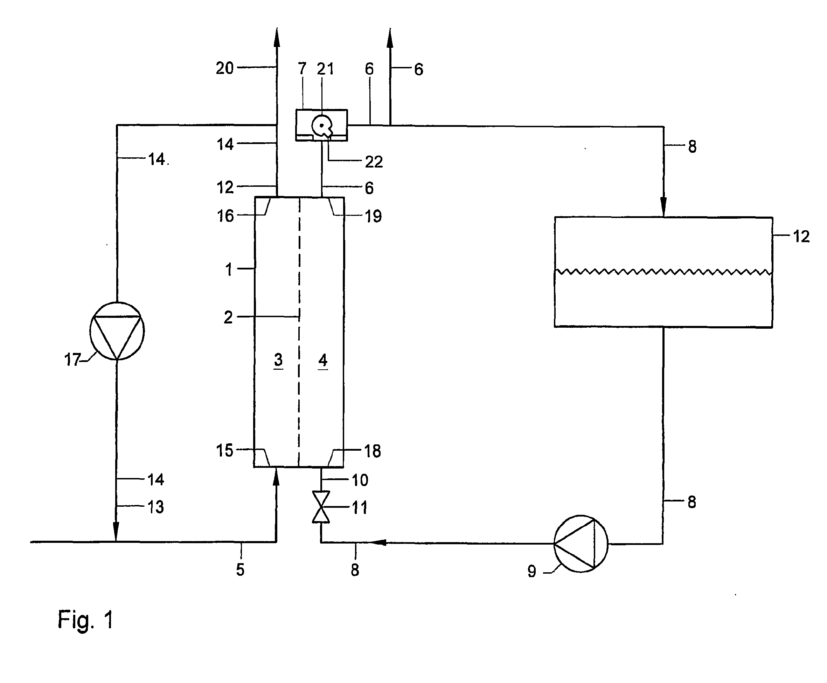

With the exemplary embodiment shown in Fig. 1, in the filter housing 1, periodically at a high frequency, a higher pressure can be built up on the permeate side than on the retentate side, such that a reversal of the fluid flow in the filter material 2 occurs and where, for the rest, a reversal of the flow direction of fluid volumes in the pipes of the apparatus is prevented. The result of all this is that a very high back-pulse frequency can be used. By combining this high back-pulse frequency with a cross-flow on both the permeate side 4 and the retentate side 3, an excellent cleaning of the filter material or the filter membrane 2 is obtained without the capacity of the apparatus being reduced considerably as a result of the back pulsing. The selectivity and the flux remain high and the process can be continued for a prolonged time.

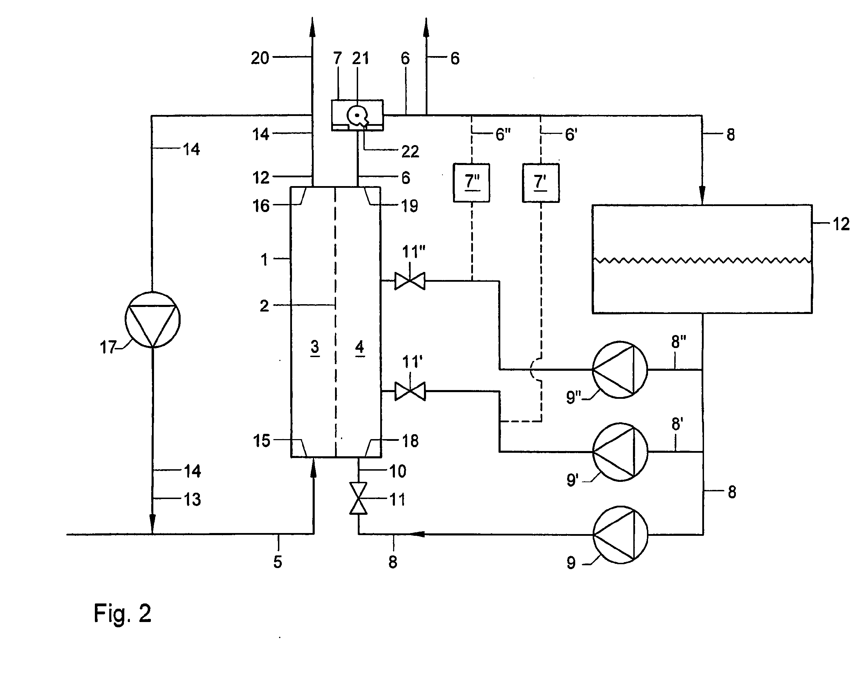

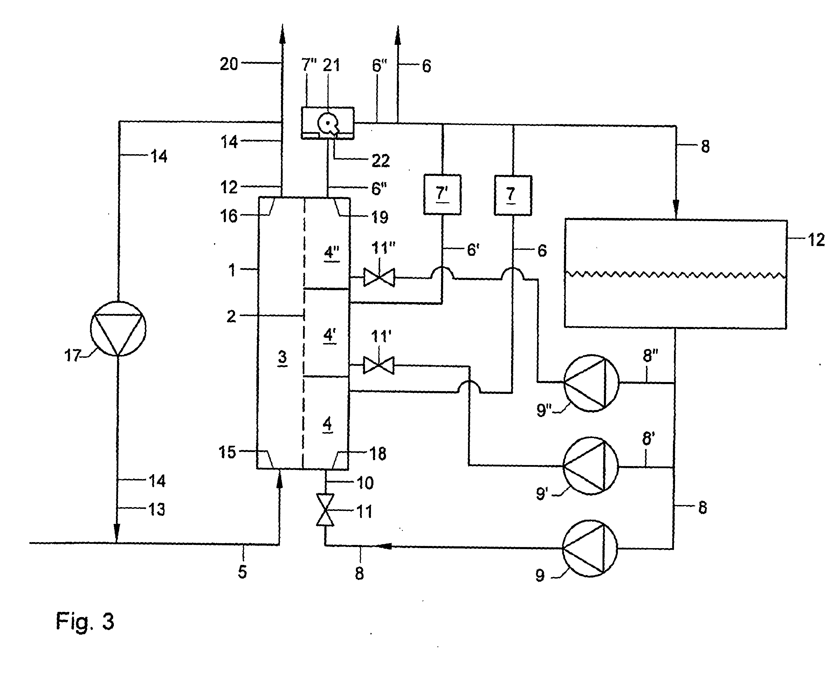

The exemplary embodiments of Figs. 2 and 3 differ from the exemplary embodiment of Fig. 1 in that three permeate circulation circuits 8, 8', 8" are present. Each permeate circulation circuit can be provided with its own pump 9, 9', 9" as shown. Each permeate circulation pump 9, 9', 9" then produces its own back-pulse pressure. However, it is also possible that only one pump is provided for all permeate circulation circuits and that the back-pulse pressures in the different circuits differ from one another in that, in each permeate circulation circuit, a different restriction 11, 11', 11" is included.

In the exemplary embodiment of Fig. 2, dotted lines indicate that, downstream of the permeate circulation pumps 9, 9', 9", short-circuit pipes are connected, which are each, by an outlet, connected to the permeate discharge pipe 6 downstream of the shut-off valve 7. In each of these short-circuit pipes, a shut-off valve 7', 7" needs to be present that is normally closed but that can be opened when the shut-off valve 7 is closed to prevent the back pulse of the respective permeate circulation circuit. In this manner, the frequency of the back pulsing can be varied per permeate circulation circuit. For this purpose, the shut-off valves 7', 7" can be designed as pulsing shut-off valves.

In the exemplary embodiment of Fig. 3, the permeate side 4 of the filter housing 1 is divided into three compartments 4, 4', 4". To each compartment 4, 4', 4", a permeate circulation pump 8, 8', 8" is connected at an upstream end of the compartment 4, 4', 4". Further, to each compartment 4, 4', 4", a discharge pipe 6, 6', 6"'is connected at a downstream end of the compartment. In each discharge pipe 6, 6', 6", a pulsing shut-off valve 7, 7', 7" is included for creating back-pulse behavior specific to the respective compartment. The shut-off valves 7, 7', 7" can be designed in the manner as described with reference to the first exemplary embodiment. Both for the exemplary embodiment of Fig. 2 and that of Fig. 3, it holds true that the (pulsing) shut-off valves 7, 7', 7" can be synchronized, for instance in that one camshaft is provided which bears a cam for each shut-off valve. In this context, synchronizing is to be understood in a broad sense, in the sense that the opening and closing of the various shut-off valves are geared to one another.

It is clear that the invention is not limited to the exemplary embodiment described but that various modifications are possible within the framework of the invention as defined by the claims.

## Claims

1. An apparatus provided with a micro or ultrafiltration filter, wherein the filter is provided with a filter housing (1) having a retentate side (3) and a permeate side (4), wherein the retentate side and the permeate side are separated from each other by filter material (2), wherein a fluid supply pipe (5) is connected to the retentate side (3) and a permeate discharge pipe (6) to the permeate side (4), wherein, in the permeate discharge pipe (6), a shut-off valve (7) operable at a high frequency is provided and wherein means (8-11) are connected to the permeate side (4) for increasing the pressure in the permeate side (4) when the said shut-off valve (7) is closed to a value which is higher than the pressure on the retentate side (3) **characterized in that** the means (8-11) for increasing the pressure comprise at least one permeate circulation circuit (8) which is, on the one side, connected, by an inlet, to the permeate discharge pipe (6) at a point downstream of the shut-off valve (7) and, on the other side, by an outlet (10), to the permeate side (4) of the filter housing (1), wherein a permeate circulation pump (9) is provided in the permeate circulation circuit.

2. An apparatus according to any of the preceding claims, wherein, upstream of the outlet (10) of the permeate circulation circuit (18) and downstream of the pump (9), a restriction (11) is included in order to prevent a jerky pressure build-up.

3. An apparatus according to any of the preceding claims, wherein, in the permeate circulation circuit (8), a permeate buffer tank (12) is provided for feeding the permeate circulation pump (9) during the closed condition of the shut-off valve (7).

4. An apparatus according to any one of the preceding claims, wherein the fluid supply pipe (5) is connected to a first end (15) of the retentate side (3) of the filter housing (1), wherein a rotentate circulation circuit (14) is provided, wherein an inlet (12) of the retentate circulation circuit (14) is connected to a second end (16) of the retentate side (3) of the filter housing (1), wherein an outlet (13) of the retentate circulation circuit (14) is connected to the fluid supply pipe (5), wherein a retentate circulation pump (17) is provided in the retentate circulation circuit (14), wherein the first end (15) is opposite the second end (16), such that, with a switched-on retentate circulation pump (17), a cross-flow along the filter material (2) occurs.

5. An apparatus according to claim 4, wherein the outlet (10) of the permeate circulation circuit is connected to a first end (18) of the permeate side (4) of the filter housing (1), wherein the permeate discharge pipe (6) is connected to a second end (19) of the permeate side (4) of the filter housing (1), wherein the first end (18) is opposite the second end (19), such that, on the permeate side (4) of the filter housing (1), a cross-flow along the filter material (2) occurs, wherein the cross-flow on the retentate side (3) has the same flow direction as the cross-flow on the permeate side (4).

6. An apparatus according to any of the preceding claims, wherein more than one permeate circulation circuit is provided for forming a corresponding number of back pulse pressure areas on the permeate side (4) of the filter housing (1).

7. An apparatus according to any one of the claims 4-5, wherein, to the retentate circulation circuit (14), a retentate discharge pipe (20) is connected.

8. An apparatus according to any one of the preceding claims, wherein the frequency at which the shut-off valve is operable is in the range of 1 to 1000 Hz.

9. An apparatus according to any one of the preceding claims, wherein the shut-off valve comprises a valve housing in which a rotating camshaft is arranged, wherein the cam of the camshaft forms a closure in a certain range of rotational positions and allows a free passage of permeate in other positions, wherein the camshaft is continuously drivable.

10. An apparatus according to claim 9, wherein the rotational speed of the camshaft is controllable for controlling the back-pulse frequency.

11. A method comprising the steps of providing and operating an apparatus according to any one of the preceding claims, wherein for operating said apparatus, in the filter housing, periodically at high frequency, a higher pressure is built up on the permeate side than on the retentate side, which higher pressure on the permeate side is built up by closing the shut-off valve while the permeate circulation pump pumps permeate around the permeate circulation circuit, such that a reversal of the fluid flow in the filter material occurs and a reversal of flow direction of fluid volumes in pipes is prevented.

12. A method according to claim 11, wherein on both the retentate and the permeate side of the filter housing, a cross-flow is maintained.

13. A method according to claim 11, wherein the apparatus includes the features of at least claim 5 and wherein, in opened condition of the shut-off valve (7), the circulation in both said circulation circuits (8, 14) is such that the pressure drop is substantially equal over the whole surface of the filter material (2).

14. A method according to any one of the claims 11-13 wherein, in a period comprising the opened and the closed position, the shut-off valve (7) is in an opened position for 50-98% of that period and is in the closed position for 2-50% of that period.

## Patentansprüche

1. Vorrichtung, die mit einem Mirko- oder Ultrafiltrationsfilter vorgesehen ist, wobei der Filter mit einem Filtergehäuse (1) vorgesehen ist, das eine Retentatseite (3) und eine Permeatseite (4) aufweist, die Retentatseite und die Permeatseite durch Filtermaterial (2) voneinander getrennt sind, eine Fluidzufuhrröhre (5) mit der Retentatseite (3) und eine Permeatabgaberöhre (6) mit der Permeatseite (4) verbunden ist, in der Permeatabgaberöhre (6) ein Absperrventil (7), das bei einer hohen Frequenz funktionsfähig ist, vorgesehen ist, und Mittel (8-11) zum Erhöhen des Drucks in der Permeatseite (4) mit der Permeatseite (4) verbunden sind, wenn das Absperrventil (7) geschlossen ist, auf einen Wert, der größer als der Druck auf der Retentatseite (3) ist,
**dadurch gekennzeichnet, dass**
die Mittel (8-11) zum Erhöhen des Drucks wenigstens einen Permeatumlaufkreis (8) enthalten, der auf der einen Seite über einen Einlass an einem Punkt stromabwärts bezüglich des Absperrventils (7) mit der Permeatabgaberöhre (6) und auf der anderen Seite über einen Auslass (10) mit der Permeatseite (4) des Filtergehäuses (1) verbunden ist, wobei eine Permeatumlaufpumpe (9) in dem Permeatumlaufkreis vorgesehen ist.

2. Vorrichtung nach einem der vorhergehenden Ansprüche, bei der stromaufwärts des Auslasses (10) des Permeatumlaufkreises (18) und stromabwärts der Pumpe (9) eine Drosselstelle enthalten ist, um einen Aufbau von raschen Druckänderungen zu vermeiden.

3. Vorrichtung nach einem der vorhergehenden Ansprüche, bei der in dem Permeatumlaufkreis (8) ein Permeatpuffertank (12) zum Beliefern der Permeatumlaufpumpe (9) während des geschlossenen Zustands des Absperrventils (7) vorgesehen ist.

4. Vorrichtung nach einem der vorhergehenden Ansprüche, bei der die Fluidzufuhrröhre (5) mit einem ersten Ende (15) der Retentatseite (8) des Filtergehäuses (1) verbunden ist, ein Retentatumlaufkreis (14) vorgesehen ist, ein Einlass (12) des Retentatumlaufkreises (14) mit einem zweiten Ende (16) der Retentatseite (3) des Filtergehäuses (1) verbunden ist, ein Auslass (13) des Retentatumlaufkreises (14) mit der Fluidzufuhrröhre (5) verbunden ist, eine Retentatumlaufpumpe (17) in dem Retentatumlaufkreis (14) vorgesehen ist, das erste Ende (15) dem zweiten Ende (16) gegenüberliegt, so dass mit einer eingeschalteten Retentatumlaufpumpe (17) eine Querströmung entlang des Filtermaterials (2) auftritt.

5. Vorrichtung nach Anspruch 4, bei welcher der Auslass (10) des Permeatumlaufkreises mit einem ersten Ende (18) der Permeatseite (4) des Filtergehäuses (1) verbunden ist, die Permeatabgaberöhre (6) mit einem zweiten Ende (19) der Permeatseite (4) des Filtergehäuses (1) verbunden ist, das erste Ende (18) dem zweiten Ende (19) gegenüberliegt, so dass auf der Permeatseite (4) des Filtergehäuses (1) eine Querströmung entlang des Filtermaterials (2) auftritt, wobei die Querströmung auf der Retentatseite (3) die gleiche Strömungsrichtung wie die Querströmung auf der Permeatseite (4) aufweist.

6. Vorrichtung nach einem der vorhergehenden Ansprüche, bei der mehr als ein Permeatumlaufkreis zum Ausbilden einer entsprechenden Anzahl von Rückdruckimpulsbereichen auf der Permeatseite (4) des Filtergehäuses (1) vorgesehen ist.

7. Vorrichtung nach Anspruch 4 oder 5, bei der mit dem Retentatumlaufkreis (14) eine Retentatabgaberöhre (20) verbunden ist.

8. Vorrichtung nach einem der vorhergehenden Ansprüche, bei der die Frequenz, bei der das Absperrventil funktionsfähig ist, sich im Bereich von 1 bis 1000 Hz befindet.

9. Vorrichtung nach einem der vorhergehenden Ansprüche, bei der das Absperrventil ein Ventilgehäuse umfasst, in dem eine drehbare Nockenwelle angeordnet ist, wobei die Nocke der Nockenwelle einen Verschluss in einem bestimmten Bereich von Drehpositionen ausbildet und einen freien Durchgang von Permeat in anderen Positionen ermöglicht, wobei die Nockenwelle kontinuierlich betreibbar ist.

10. Vorrichtung nach Anspruch 9, bei der die Drehgeschwindigkeit der Nockenwelle zum Steuern der Rückimpulsfrequenz steuerbar ist.

11. Verfahren, das die Schritte des Bereitstellens und Betreibens einer Vorrichtung nach einem der vorhergehenden Ansprüche umfasst, wobei zum Betreiben der Vorrichtung in dem Filtergehäuse periodisch mit einer hohen Frequenz ein größerer Druck auf der Permeatseite als auf der Retentatseite aufgebaut wird, wobei der größere Druck auf der Permeatseite durch Schließen des Absperrventils erzeugt wird, während die Permeatumlaufpumpe Permeat durch den Permeatumlaufkreis pumpt, so dass eine Umkehr der Fluidströmung in dem Filtermaterial auftritt und eine Umkehr der Strömungsrichtung von Fluidvolumina in Röhren vermieden wird.

12. Verfahren nach Anspruch 11, bei dem sowohl auf der Retentat- als auch der Permeatseite des Filtergehäuses eine Querströmung beibehalten wird.

13. Verfahren nach Anspruch 11, bei dem die Vorrichtung wenigstens die Merkmale des Anspruchs 5 enthält und wobei in einem offenen Zustand des Absperrventils (7) der Umlauf in beiden Umlaufkreisen (8, 14) so ist, dass der Druckabfall über die gesamte Oberfläche des Filtermaterials (2) im Wesentlichen gleich ist.

14. Verfahren nach einem der Ansprüche 11 bis 13, bei der in einer Periode, welche die geöffnete und geschlossene Position umfasst, sich das Absperrventil (7) für 50-98% der Periode in einer geöffneten Position befindet und sich für 2-50% dieser Periode in der geschlossenen Position befindet.

## Revendications

1. Appareil doté d'un filtre à microfiltration ou à ultrafiltration, dans lequel le filtre est équipé d'un boîtier de filtre (1) ayant un côté de rétentat (3) et un côté de perméat (4), dans lequel le côté de rétentat et le côté de perméat sont séparés l'un de l'autre par le matériau filtrant (2), dans lequel un tuyau d'alimentation de fluide (5) est raccordé au côté de rétentat (3) et un tuyau de décharge de perméat (6) au côté de perméat (4), dans lequel, dans le tuyau de décharge de perméat (6), est placée une vanne d'arrêt (7) pouvant fonctionner à haute fréquence et dans lequel des moyens (8 - 11) sont raccordés au côté de perméat (4) pour augmenter la pression du côté de perméat (4) lorsque ladite vanne d'arrêt (7) est fermée selon une valeur qui est supérieure à la pression du côté du rétentat (3), **caractérisé en ce que** les moyens (8 - 11) pour augmenter la pression comprennent au moins un circuit de circulation de perméat (8) qui est, d'un côté, raccordé, par une entrée, au tuyau de décharge de perméat (6) au niveau d'un point en aval de la vanne d'arrêt (7) et de l'autre côté, par une sortie (10), au côté de perméat (4) du boîtier de filtre (1), dans lequel une pompe de circulation de perméat (9) est disposée dans le circuit de circulation de perméat.

2. Appareil selon l'une quelconque des revendications précédentes, dans lequel, en amont de la sortie (10) du circuit de circulation de perméat (18) et, en aval de la pompe (9), est incluse une restriction (11) servant à d'empêcher une accumulation de pression saccadée.

3. Appareil selon l'une quelconque des revendications précédentes, dans lequel, dans le circuit de circulation de perméat (8) on prévoit un réservoir tampon de perméat (12) servant à alimenter la pompe de circulation de perméat (9) pendant la condition fermée de la vanne d'arrêt (7).

4. Appareil selon l'une quelconque des revendications précédentes, dans lequel le tuyau d'alimentation de fluide (5) est raccordé à une première extrémité (15) du côté de rétentat (3) du boîtier de filtre (1), dans lequel on prévoit un circuit de circulation de rétentat (14), dans lequel une entrée (12) du circuit de circulation de rétentat (14) est raccordée à une deuxième extrémité (16) du côté de rétentat (3) du boîtier de filtre (1), dans lequel une sortie (13) du circuit de circulation de rétentat (14) est raccordée au tuyau d'alimentation de fluide (5), dans lequel une pompe de circulation de rétentat (17) est disposée dans le circuit de circulation de rétentat (14), dans lequel la première extrémité (15) est opposée à la deuxième extrémité (16), de sorte à produire, avec une pompe de circulation de rétentat (17) en marche, un écoulement transversal le long du matériau filtrant (2).

5. Appareil selon la revendication 4, dans lequel la sortie (10) du circuit de circulation de perméat est raccordée à une première extrémité (18) du côté de perméat (4) du boîtier de filtre (1), dans lequel le tuyau de décharge de perméat (6) est raccordé à une deuxième extrémité (19) du côté de perméat (4) du boîtier de filtre (1), dans lequel la première extrémité (18) est opposée à la deuxième extrémité (19), de sorte que, du côté de perméat (4) du boîtier de filtre (1), un écoulement transversal le long du matériau filtrant (2) se produise, dans lequel l'écoulement transversal du côté de rétentat (3) a la même direction d'écoulement que l'écoulement transversal du côté de perméat (4).

6. Appareil selon l'une quelconque des revendications précédentes, dans lequel on prévoit plus d'un circuit de circulation de perméat afin de former un nombre correspondant de zones de pression d'impulsion de retour du côté de perméat (4) du boîtier de filtre (1).

7. Appareil selon l'une quelconque des revendications 4 à 5, dans lequel, au circuit de circulation de rétentat (14), on raccorde un tuyau de décharge de rétentat (20).

8. Appareil selon l'une quelconque des revendications précédentes, dans lequel la fréquence à laquelle la vanne d'arrêt peut fonctionner, est de l'ordre de 1 à 1000 Hz.

9. Appareil selon l'une quelconque des revendications précédentes, dans lequel la vanne d'arrêt comprend un boîtier de soupape dans lequel on agence un arbre à cames rotatif, dans lequel la came de l'arbre à cames forme une fermeture dans une certaine plage de positions rotatives et permet un libre passage du perméat dans d'autres positions, dans lequel l'arbre à cames peut être entraîné de manière continue.

10. Appareil selon la revendication 9, dans lequel la vitesse de rotation de l'arbre à cames peut être contrôlée pour contrôler la fréquence d'impulsion de retour.

11. Procédé comprenant les étapes consistant à pourvoir et faire fonctionner un appareil selon l'une quelconque des revendications précédentes, dans lequel pour faire fonctionner ledit appareil, dans le boîtier de filtre, périodiquement à haute fréquence, une plus haute pression s'accumule du côté de perméat que du côté de rétentat, laquelle plus haute pression du côté de perméat s'accumule en fermant la vanne d'arrêt alors que la pompe de circulation de perméat pompe le perméat autour du circuit de circulation de perméat, de sorte à produire une inversion de l'écoulement de fluide dans le matériau filtrant et à empêcher une inversion de la direction d'écoulement des volumes de fluide dans les tuyaux.

12. Procédé selon la revendication 11, dans lequel un écoulement transversal se maintient à la fois du côté de rétentat et du côté de perméat du boîtier de filtre.

13. Procédé selon la revendication 11, dans lequel l'appareil comprend les caractéristiques d'au moins la revendication 5 et dans lequel, dans la condition ouverte de la vanne d'arrêt (7), la circulation dans lesdits deux circuits de circulation (8, 14) est telle que la chute de pression est sensiblement identique sur toute la surface du matériau filtrant (2).

14. Procédé selon l'une quelconque des revendications 11 à 13, dans lequel, dans une période comprenant la position ouverte et la position fermée, la vanne d'arrêt (7) est dans une position ouverte pendant 50 - 98% de cette période, et est dans la position fermée pendant 2 - 50% de cette période.
